# EUROPEAN PATENT SPECIFICATION

(11) **EP 2 391 534 B1**
(45) Date of publication and mention of the grant of the patent: **02.08.2017**
(21) Application number: 10735500.0
(22) Date of filing: 14.01.2010
(51) Int. Cl.: B65D 90/04, B65D 90/06

(54) **CONTAINER**
BEHÄLTER
CONTENEUR

(30) Priority: 02.02.2009 FI 20090029; 25.05.2009 FI 20090206
(43) Date of publication of application: 07.12.2011
(73) Proprietor: Sommardal, Tom, 00160 Helsingfors (FI)
(72) Inventor: Sommardal, Tom, 00160 Helsingfors (FI)
(74) Representative: Heinonen & Co
(86) International application number: PCT/FI2010/000003
(87) International publication number: WO 2010/086491

(56) References cited:
- WO-A1-2008/118036
- GB-A- 800 008
- US-A- 2 070 346
- US-A- 2 859 895
- US-A- 3 019 937
- US-A- 3 021 808
- US-A- 3 026 577
- US-A- 3 140 515

## Description

This invention relates to a container for storage or transport of liquids, with the aim of maintaining the temperature of the liquid as constant as possible by means of insulation, the container insulation being disposed within the container and fastened to the walls of the container.

The insulation consists of wood blocks placed closely together and fastened to the inner wall of the container. The next layer of wood blocks are disposed closely adjacent each other and fastened to the preceding layer, and/or at right angles to the preceding layer so as to achieve maximal density of the insulation. The number of wooden layers is determined by the thickness of the timber and of the insulation power desired for the container.

In previously known insulated containers, the insulating material is disposed on the outer side of the container. There are a number of cases where cargo tanks of ships have been provided with insulation on the inner side, however, in those cases, the insulation has been made of glass building blocks, or as an alternative, the insulation material has been shielded by an inner tank made of thinner sheet metal in order to protect the insulating material from direct contact with the liquid/oil stored in the container. Insulation provided on the outer side of a ship cargo tank is a costly solution, requiring freely placed tanks and/or an empty air space around the insulated tanks. Currently known bitumen or oil tanks provided with glass block insulation on the inner side or with insulation material shielded by a thin inner tank require an extremely costly manufacturing method, in addition to precious materials.

Previously known solutions comprising wood insulation materials disposed within the container have been disclosed by relatively old patent specifications, such as e.g. GB 800,008, GB 921,696, US 2,859,895, US 3,026,577 and US 3,030,669. GB patent specification 800,008 recommends balsa wood, which is a lightweight kind of timber whose insulating coefficient is fairly good. Further, US 3,140,515 describes a container, where the insulation of the container is disposed within the container and fastened to the walls of the container comprising of three functionally distinguished layers for structural strength, insulation and liquid imperviousness, further, said insulation being provided with expansion joints.

The present invention has the purpose of providing a container insulation that is light, durable, straighforward and inexpensive and whose insulation power is equal, or even superior to that of containers provided with thick insulation materials on the outer side. The container in accordance with the invention shows the features defined in claim 1, in particular an insulation made of thermally treated timber, treated according to a thermal treatment process such as but not limited to those discussed in WO 2008/118036 and US 5,678,324, with a high insulation coefficient and good dimensional stability. The timber may consist of quite ordinary Finnish softwood, such as spruce or pine. Various embodiments of the invention are described in the dependent claims of the set of claims.

The invention yields the following benefits: thermally treated timber
- has an insulation coefficient by approx. 25% higher than that of commonly known usual timber. This results in a low temperature maintained on the outer side of the container.
- Does not vary under alterations of temperature and moisture
- Does not absorb liquids
- Has a service life much longer than that of untreated timber
- Is not exposed to fire hazards since placed within the container
- Is harmless to the environment and easily replaceable, consequently will not form hazardous waste
- Is chemically resistant and stands hot liquids and gases
- Increases the strength of the inside of the container.

Disposing the insulation on the inner side of the container is a better solution for technical considerations of space as well. It enables thicker insulation to be readily provided e.g. in the upper parts and in the lid of the container, where heat tends to escape. In ships, ballast tanks in contact with containers insulated in accordance with the invention are not exposed to heat or condensation damage, since a low temperature is maintained outside the container.

The invention is described below with the aid of a number of examples and with reference to the accompanying drawings, in which:

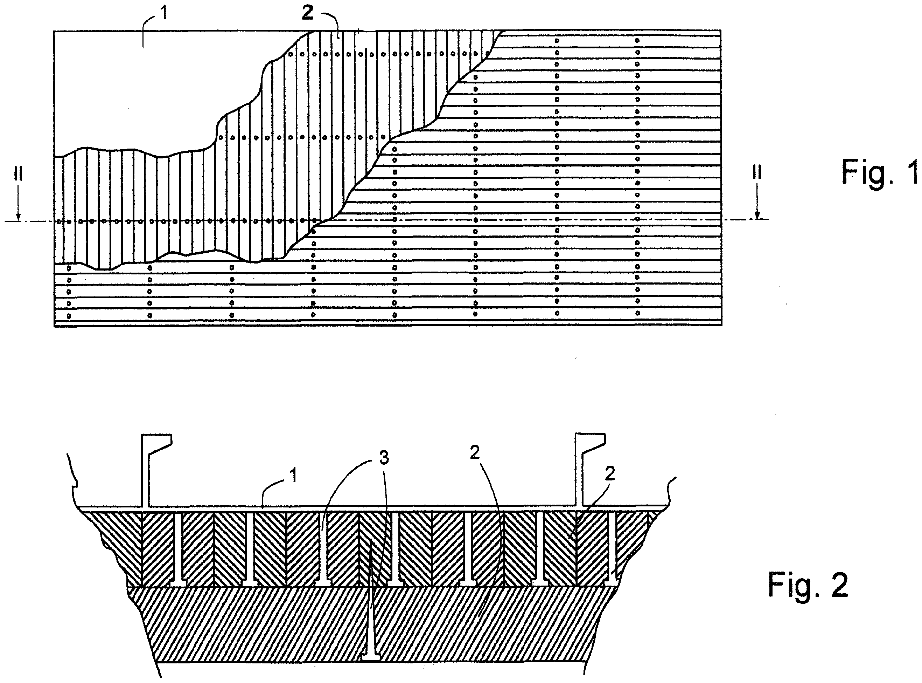

Figure 1 illustrates a container wall viewed in partial section from within the container.
Figure 2 illustrates an enlarged section II-II of figure 1.
Figure 3 is a cross-sectional view of a ship provided with an insulated container surrounded by ballast tanks.
Figure 4 illustrates an insulated pressure vessel.

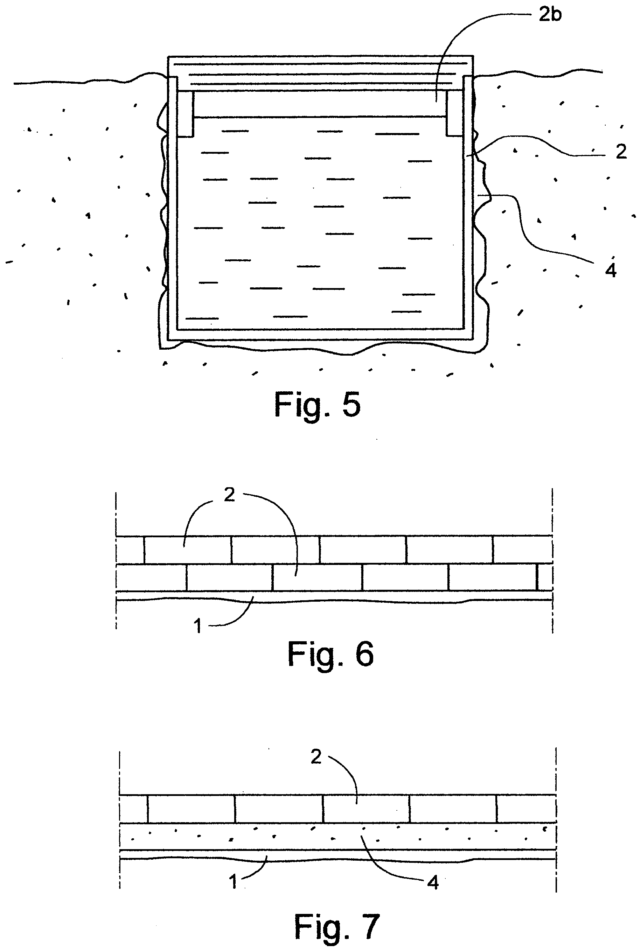

Figure 5 illustrates a rock container.
Figure 6 illustrates an insulation comprising two layers of thermally treated timber and
Figure 7 illustrates an embodiment in which the second thermally treated timber layer has been replaced with cellular plastic, such as polyurethane.

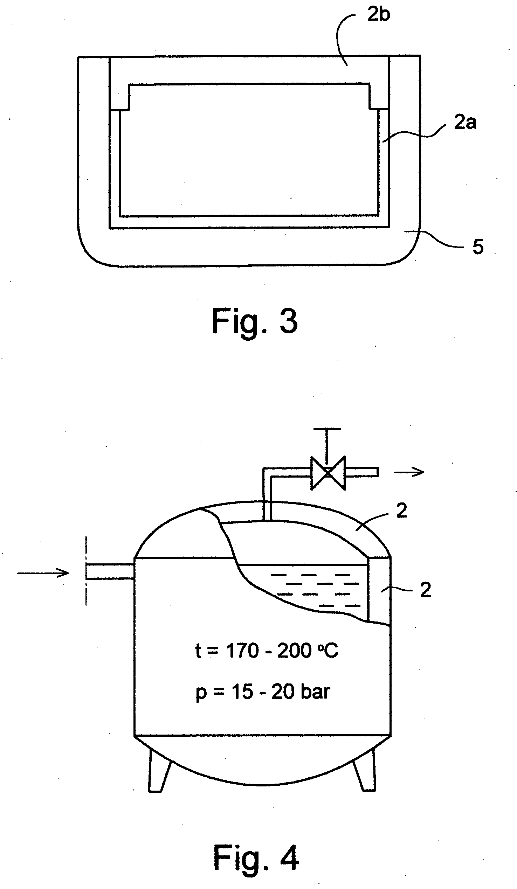

The purpose of the container may be storage or transport of liquids, with the aim to maintain the temperature of the liquid on a level as constant as possible by means of insulation. The insulation 2, 2a, 2b of the container is situated within the container and fastened 3 to the walls I of the container. The insulation 2, 2a, 2b consists of thermally treated timber, whose insulation coefficient is high and dimensional stability is good. The container may be a transportable container or an oil cistern. The container may be a pressure vessel (figure 4) allowing storage of a liquid, such as water, under high pressure, e.g. 15 - 25 bars, and at a temperature e.g. in the range 170 - 200°C, and applicable as an energy source for a turbine or a steam engine. Insulation of a second, lighter material, such as cellular plastic 4, e.g. polyurethane, polystyrene or the like, may be provided between the timber insulation 2 and the container wall 1.

Calculations and empirical tests have proved that, say, the transport of heavy oil at a temperature of 60°C consumes 4 to 10 tons of oil per day for heating of the oil, depending on the tank volume. When a container in accordance with the invention is used, the consumption is cut to 0.4 to 0.5 tons of oil per day. A substantial economy is thus achieved.

Thus, the insulation coefficient of a cargo container or any other similar container insulated in accordance with the invention will be high enough even for profitable transport of heat energy from the cooling water of a nuclear power plant to adequate sites for energy recovery, such as district heating, for instance. At present, the heat energy of cooling water is conducted off-shore.

An insulation disposed within the container makes it very easy to measure the surface temperature on the outside of the receptacle, tank or cargo container and thus to calculate the loss of heat, and if necessary, to provide supplementary insulation where desired.

## Claims

1. A container for the transport or storage of warm liquids such as heavy oil and bitumen with the aim of maintaining the temperature of the liquid as constant as possible by means of insulation, the insulation (2, 2a, 2b) of the container being disposed within the container and fastened (3) to the walls of the container, **characterised in that** the insulation (2, 2a, 2b) consists of thermally treated timber having an insulation coefficient and dimensional stability suitable for maintaining the temperature of the liquid as constant as possible, with a first layer of wood blocks placed closely adjacent each other and fastened to the inner wall of the container, and a next layer of wood blocks placed closely adjacent each other and fastened perpendicular to the preceding layer to achieve maximal density of the insulation.

2. A container as defined in claim 1, **characterised in that** the container is a transportable cargo container or an oil tank.

3. A container as defined in claim 1, **characterised in that** the container is a pressure vessel for storage of a liquid under high pressure, e.g. 15 to 25 bars and at a temperature e.g. in the range of 170 to 200°C, which can be utilised as the energy source of a turbine or a steam engine.

4. A container as defined in any of the preceding claims, **characterised in that** an insulation of a second, lighter material, such as cellular plastic (4), e.g. polyurethane, polystyrene or the like, is provided between the timber insulation and the container wall.

5. A container as defined in any of the preceding claims, **characterised in that** a thicker insulation (2b) layer is provided in the upper part of the container.

## Patentansprüche

1. Behälter für den Transport oder die Speicherung warmer Flüssigkeiten, wie etwa schweres Öl und Bitumen, mit dem Ziel, die Temperatur der Flüssigkeit mithilfe von Isolierung so konstant wie möglich zu halten, wobei die Isolierung (2, 2a, 2b) des Behälters im Behälter angeordnet und an den Wänden des Behälters befestigt (3) ist, **dadurch gekennzeichnet, dass** die Isolierung (2, 2a, 2b) aus thermisch behandeltem Holz besteht, das einen Isolierungskoeffizienten und eine Dimensionsstabilität aufweist, die geeignet sind, die Temperatur der Flüssigkeit so konstant wie möglich zu halten, mit einer ersten Lage von Holzblöcken, die nahe beieinander platziert und an der inneren Wand des Behälters befestigt sind, und einer nächsten Lage von Holzblöcken, die nahe beieinander platziert und senkrecht zur vorherigen Lage befestigt sind, um eine maximale Dichte der Isolierung zu erreichen.

2. Behälter nach Anspruch 1, **dadurch gekennzeichnet, dass** es sich bei dem Behälter um einen transportierbaren Frachtbehälter oder um einen Öltank handelt.

3. Behälter nach Anspruch 1, **dadurch gekennzeichnet, dass** es sich bei dem Behälter um ein Druckgefäß zum Speichern einer Flüssigkeit unter hohem Druck, beispielsweise 15 bis 25 bar, und bei hoher Temperatur, beispielsweise im Bereich von 170 bis 200 °C, handelt, der als Energiequelle einer Turbine oder einer Dampfmaschine genutzt werden kann.

4. Behälter nach einem der vorhergehenden Ansprüche, **dadurch gekennzeichnet, dass** eine Isolierung eines zweiten, leichteren Materials, wie etwa eines zellularen Kunststoffs (4), beispielsweise Polyurethan, Polystyren oder Ähnliches, zwischen der Holzisolierung und der Behälterwand bereitgestellt ist.

5. Behälter nach einem der vorhergehenden Ansprüche, **dadurch gekennzeichnet, dass** eine dickere Lage Isolierung (2b) im oberen Teil des Behälters bereitgestellt ist.

## Revendications

1. Conteneur pour le transport ou le stockage de liquides chauds tels que du pétrole lourd et du bitume dans le but de maintenir la température du liquide aussi constante que possible par isolation, l'isolation (2, 2a, 2b) du conteneur étant disposée à l'intérieur du conteneur et fixée (3) aux parois du conteneur, **caractérisé en ce que** l'isolation (2, 2a, 2b) consiste en du bois de construction traité thermiquement ayant un coefficient d'isolation et une stabilité dimensionnelle appropriés pour maintenir la température du liquide aussi constante que possible avec une première couche de blocs de bois placés de façon étroitement adjacente l'un à l'autre et fixés sur la paroi intérieure du conteneur et une couche suivante de blocs de bois placés de façon étroitement adjacente l'un à l'autre et fixés perpendiculairement à la couche précédente pour obtenir la densité maximale de l'isolation.

2. Conteneur selon la revendication 1, **caractérisé en ce que** le conteneur est un conteneur de cargo transportable ou un réservoir de pétrole.

3. Conteneur selon la revendication 1, **caractérisé en ce que** le conteneur est une cuve sous pression pour stocker un liquide sous haute pression, par ex. 15 à 25 bar et à une température située par ex. dans la plage de 170 à 200°C qui peut être utilisée en tant que la source d'énergie d'une turbine ou d'un moteur à vapeur.

4. Conteneur selon l'une quelconque des revendications précédentes, **caractérisé en ce qu'**une isolation d'un second matériau plus léger, comme du plastique cellulaire (4), par ex. du polyuréthane, du polystyrène ou similaire est fournie entre l'isolation par bois de construction et la paroi du conteneur.

5. Conteneur selon l'une quelconque des revendications précédentes, **caractérisé en ce qu'**une couche d'isolation plus épaisse (2b) est prévue dans la partie supérieure du conteneur.
